(19) Europäisches Patentamt
European Patent Office
Office européen des brevets

(11) **EP 4 053 602 A1**

(12) **EUROPEAN PATENT APPLICATION**
published in accordance with Art. 153(4) EPC

(43) Date of publication:
**07.09.2022 Bulletin 2022/36**

(21) Application number: **20881484.8**

(22) Date of filing: **18.09.2020**

(51) International Patent Classification (IPC):
**G02B 5/128** (2006.01)     **B32B 7/023** (2019.01)

(52) Cooperative Patent Classification (CPC):
**B32B 7/023; G02B 5/08; G02B 5/128; G02B 5/13**

(86) International application number:
**PCT/JP2020/035508**

(87) International publication number:
**WO 2021/084968 (06.05.2021 Gazette 2021/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.11.2019 JP 2019199610**

(71) Applicant: **Unitika Sparklite Ltd.**
**Nantan-shi, Kyoto 629-0311 (JP)**

(72) Inventors:
• **NISHIMURA, Yasutaka**
**Nantan-shi, Kyoto 629-0311 (JP)**
• **FUJIKI, Motomu**
**Nantan-shi, Kyoto 629-0311 (JP)**
• **TODA, Yuji**
**Nantan-shi, Kyoto 629-0311 (JP)**
• **SAYAMA, Yasuyoshi**
**Neyagawa-shi, Osaka 572-0071 (JP)**

(74) Representative: **Müller-Boré & Partner**
**Patentanwälte PartG mbB**
**Friedenheimer Brücke 21**
**80639 München (DE)**

(54) **RETROREFLECTIVE MATERIAL**

(57) The purpose of the present invention is to provide a retroreflective material which has excellent retroreflective performance and exhibits a matte color tone without glare under fluorescent light or sunlight, and with which changes in color tone due to the angle of viewing have been curbed. This retroreflective material comprises: a layered body comprising a transparent resin layer, a reflecting layer, and a fixing resin layer in the stated order from an incident light side; transparent microspheres that are embedded in the layered body and are partially exposed to the incident light side; and a colored layer that is provided on the incident light side of the transparent resin layer and to a display region not in contact with the transparent microspheres. The reflecting layer is made of a metal thin film; the transparent microspheres have a refractive index of 1.6-2.5 and are exposed to the air in a state of having an exposure rate of 30-70%; and a region where a luminance gain value found by a predetermined method of measurement is 0-40 has a surface area ratio (A0-40) of 42-50%, a region where the luminance gain value is 40-200 has a surface area ratio (A40-200) of 18-30%, and a region where the luminance gain value is 200-255 has a surface area ratio (A200-255) of 22-35%.

FIG. 1

**Description**

TECHNICAL FIELD

The present invention relates to a retroreflective material having excellent retroreflective performance, exhibiting a matte color tone without glare under fluorescent light or sunlight, and being restrained from change in the color tone caused by change in the viewing angle.

BACKGROUND ART

Conventionally, retroreflective materials, which retroreflect incident light, have been widely used for displaying traffic signs and the like and for identifying implement against marine accident, particularly in order to improve visibility at night. From the viewpoint of ensuring the safety of people working at night, retroreflective materials have been widely used also in safety clothing, such as safety clothes, safety vests, sashes, arm bands, and life vests, for policemen, firefighters, workers involved in civil engineering and construction, and the like. As safety consciousness has increased and decoration has diversified recently, retroreflective materials have been also used in apparel such as windbreakers, training wears, T-shirts, sports shoes, and swimsuits for preventing traffic accidents at night, and used in bags, suitcases, and the like for decorative purposes.

A general retroreflective material has a structure of a layered body including a fixing resin layer and a reflective layer that are layered and including a transparent microsphere embedded from the reflective layer side. Initial retroreflective materials exhibit metal colors due to their reflective layers under fluorescent light or sunlight, but in recent years, various colored retroreflective materials have been developed in an attempt to improve design.

For example, Patent Documents 1 and 2 disclose that a colored layer is disposed on a reflective layer to color a retroreflective material.

PRIOR ART DOCUMENTS

PATENT DOCUMENTS

Patent Document 1: Japanese Patent Laid-open Publication No. 62-62301
Patent document 2: Japanese Patent Laid-open Publication No. 2016-28293

SUMMARY OF THE INVENTION

PROBLEMS TO BE SOLVED BY THE INVENTION

In Patent Documents 1 and 2, transparent microspheres are temporarily adhered to a release support, and in the release support, an ink composition for formation of a colored layer is applied to the surface on the transparent microsphere side to form a colored layer, then a reflective layer and a fixing resin layer are layered, and the release support is removed to produce a retroreflective material provided with the colored layer. However, in the production method in which the colored layer and the reflective layer are sequentially layered with respect to the transparent microspheres as in Patent Documents 1 and 2, the ink of the colored layer inevitably remains between the transparent microspheres and the reflective layer, and the retroreflective performance may deteriorate. When the retroreflective materials in Patent Documents 1 and 2 are viewed from the front under fluorescent light or sunlight, glare due to diffuse reflection of light by the reflective layer is visually recognized through the transparent microspheres, or even if no glare occurs when the retroreflective materials are viewed from the front, glare occurs when the retroreflective materials are viewed in an oblique direction. Thus, the retroreflective materials in Patent Documents 1 and 2 have a disadvantage that the color tone depends on the viewing angle.

Furthermore, retroreflective materials have been recently desired to have various design, and as one of the needs of consumers, a retroreflective material colored in a matte tone (color tone with low gloss) has been awaited. However, the retroreflective materials in Patent Documents 1 and 2 are not satisfactory in terms of the matte tone (color tone with low gloss).

Therefore, an object of the present invention is to provide a retroreflective material having excellent retroreflective performance, exhibiting a matte color tone without glare under fluorescent light or sunlight, and being restrained from change in the color tone caused by change in the viewing angle.

MEANS FOR SOLVING THE PROBLEM

As a result of intensive studies to solve the above-described problems, the present inventors have found that a retroreflective material having excellent retroreflective performance, exhibiting a matte color tone without glare under fluorescent light or sunlight, and being restrained from change in the color tone (change in the presence or absence of glare) caused by change in the viewing angle can be obtained by disposing a colored layer by gravure printing under specific conditions on the incident light side of a retroreflective material intermediate that includes a layered body including a transparent resin layer, a reflective layer, and a fixing resin layer in this order from the incident light side, and includes transparent microspheres embedded in the layered body.

The present inventors observed the incident light side of the retroreflective material having the above properties with a digital microscope, and as a result, have found that the color of the colored layer is deep in the peripheral region of each transparent microsphere and is paler in a region more distant from each transparent microsphere, and that the colored layer is not formed on the surface of the transparent microspheres. The present inventors analyzed the degree of the difference in shades in the image of the colored layer observed with a digital microscope under specific setting conditions, and have specified the area ratio of the region having a luminance gain value of 0 to 40 ($A_{0-40}$), the area ratio of the region having a luminance gain value of 40 to 200 ($A_{40-200}$), and the area ratio of the region having a luminance gain value of 200 to 255 ($A_{200-255}$). As a result, it has been found that the retroreflective material having the above properties has area ratios satisfying that $A_{0-40}$ is 42 to 50%, $A_{40-200}$ is 18 to 30%, and $A_{200-255}$ is 22 to 35%.

The present invention has been completed by further studies based on the above-described findings.

That is, the present invention provides the invention of the aspects described below.

Item 1. A retroreflective material comprising:

a layered body including a transparent resin layer, a reflective layer, and a fixing resin layer in order described above from an incident light side of the retroreflective material;
transparent microspheres embedded in the layered body and each partially exposed to the incident light side of the retroreflective material; and
a colored layer disposed on an incident light side of the transparent resin layer on a surface region that is not in contact with the transparent microspheres, wherein
the reflective layer consists of a metal thin film, and
the transparent microspheres have a refractive index of 1.6 to 2.5 and are exposed to air in a state of having an exposure ratio of 30 to 70%,
the retroreflective material has an area ratio of a region having a luminance gain value of 0 to 40 ($A_{0-40}$) of 42 to 50%, an area ratio of a region having a luminance gain value of 40 to 200 ($A_{40-200}$) of 18 to 30%, and an area ratio of a region having a luminance gain value of 200 to 255 ($A_{200-255}$) of 22 to 35%, as determined with a method described below.

<Method of determining $A_{0-40}$, $A_{40-200}$, and $A_{200-255}$>

(1) an image is obtained by photographing the incident light side of the retroreflective material with a digital microscope at a magnification of 300.
(2) the image obtained in (1) is captured in image analysis/measurement software capable of binarization processing and measurement of an area of a binarized region, a measurement range including 50 or more of the transparent microspheres is specifiefid, and a monochrome image of the measurement range is formed.
(3) the monochrome image formed in (2) is binarized into a region having a luminance gain value of 0 to 40 and another region, and an area ratio (%) of the region having a luminance gain value of 0 to 40 is calculated as $A_{0-40}$.

the monochrome image formed in (2) is binarized into a region having a luminance gain value of 40 to 200 and another region, and an area ratio (%) of the region having a luminance gain value of 40 to 200 is calculated as $A_{40-200}$.
the monochrome image formed in (2) is binarized into a region having a luminance gain value of 200 to 255 and another region, and an area ratio (%) of the region having a luminance gain value of 200 to 255 is calculated as $A_{200-255}$.

Item 2. The retroreflective material according to Item 1, wherein

in the monochrome image binarized into the region having a luminance gain value of 0 to 40 and another region, the region having a luminance gain value of 0 to 40 is present in a peripheral region of each of the transparent microspheres, and

in the monochrome image binarized into the region having a luminance gain value of 40 to 200 and another region, the region having a luminance gain value of 40 to 200 is present in a region other than the peripheral region of each of the transparent microspheres.

Item 3. The retroreflective material according to Item 1 or 2, wherein the colored layer is black.

Item 4. The retroreflective material according to Item 3, wherein the colored layer includes carbon black.

EFFECTS OF THE INVENTION

The retroreflective material of the present invention has excellent retroreflective performance, exhibits a matte color tone without glare under fluorescent light or sunlight, and is restrained from change in the color tone (change in the presence or absence of glare) caused by change in the viewing angle, and therefore can be excellent in design.

BRIEF DESCRIPTION OF THE DRAWINGS

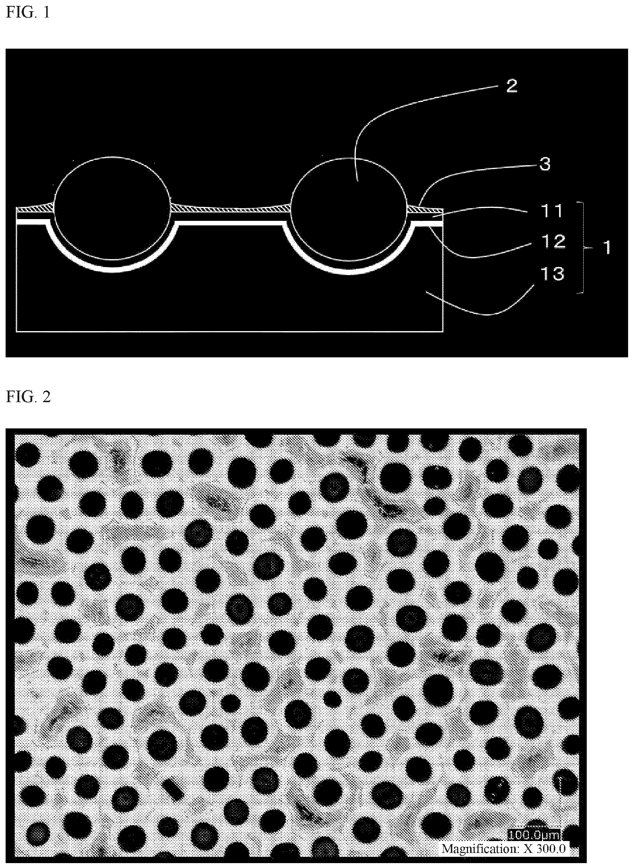

Fig. 1 is a schematic sectional view of an example of a retroreflective material of the present invention.

Fig. 2 is an image of the retroreflective material of Example 1 observed with a digital microscope at a magnification of 300.

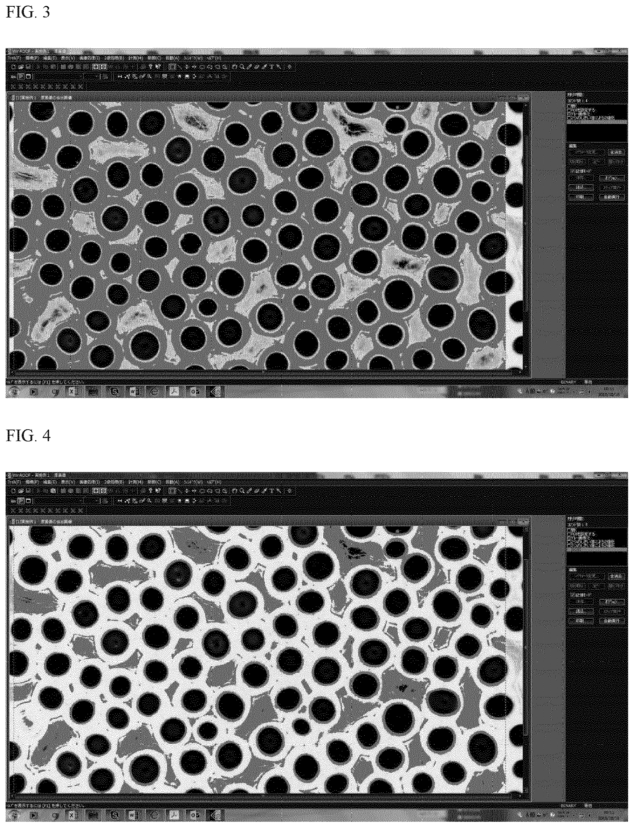

Fig. 3 is an image obtained by capturing the image of the retroreflective material of Example 1 shown in Fig. 2 in image analysis/measurement software capable of binarization processing and measurement of an area of a binarized region (WinROOF Ver. 7.0.0 (manufactured by MITANI Corporation)), specifying a measurement range including 50 or more of the transparent microspheres, forming a monochrome image of the measurement range, and binarizing the monochrome image into a region having a luminance gain value of 0 to 40 and another region (a region having a luminance gain value of 0 to 40 shown in gray, and another region shown in black or white). The region having a luminance gain value of 0 to 40 is colored and identified by the binarization processing. In Fig. 3, the image obtained by the binarization processing is shown in black and white, and thus the region having a luminance gain value of 0 to 40 is shown in gray. The same applies to Fig. 4 to 6.

Fig. 4 is an image obtained by capturing the image of the retroreflective material of Example 1 shown in Fig. 2 in image analysis/measurement software capable of binarization processing and measurement of an area of a binarized region (WinROOF Ver. 7.0.0 (manufactured by MITANI Corporation)), specifying a measurement range including 50 or more of the transparent microspheres, forming a monochrome image of the measurement range, and binarizing the monochrome image into a region having a luminance gain value of 40 to 200 and another region (a region having a luminance gain value of 40 to 200 shown in gray, and another region shown in black or white).

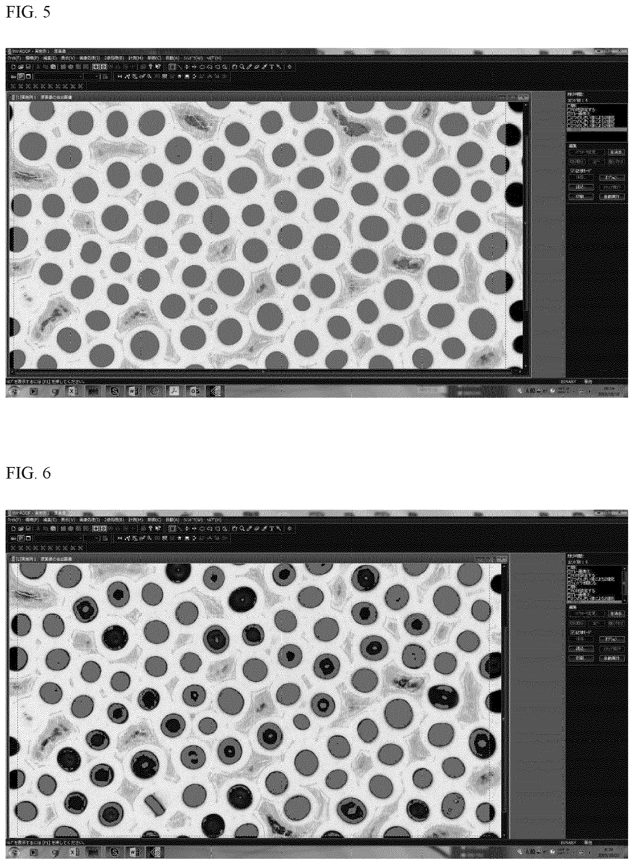

Fig. 5 is an image obtained by capturing the image of the retroreflective material of Example 1 shown in Fig. 2 in image analysis/measurement software capable of binarization processing and measurement of an area of a binarized region (WinROOF Ver. 7.0.0 (manufactured by MITANI Corporation)), specifying a measurement range including 50 or more of the transparent microspheres, forming a monochrome image of the measurement range, and binarizing the monochrome image into a region having a luminance gain value of 200 to 255 and another region (a region having a luminance gain value of 200 to 255 shown in gray on the transparent glass spheres, and another region shown in black, gray, or white).

Fig. 6 is an image obtained by capturing the image of the retroreflective material of Example 1 shown in Fig. 2 in image analysis/measurement software capable of binarization processing and measurement of an area of a binarized region (WinROOF Ver. 7.0.0 (manufactured by MITANI Corporation)), specifying a measurement range including 50 or more of the transparent microspheres, forming a monochrome image of the measurement range, and binarizing the monochrome image into a region having a luminance gain value of 250 to 255 and another region (a region having a luminance gain value of 250 to 255 shown in gray on the transparent glass spheres, and another region shown in black, gray, or white).

EMBODIMENTS OF THE INVENTION

The retroreflective material of the present invention includes a layered body including a transparent resin layer, a reflective layer, and a fixing resin layer in order described above from an incident light side of the retroreflective material, transparent microspheres embedded in the layered body and each partially exposed to the incident light side of the retroreflective material, and a colored layer disposed on an incident light side of the transparent resin layer on a surface region that is not in contact with the transparent microspheres, wherein the reflective layer consists of a metal thin film, the transparent microspheres have a refractive index of 1.6 to 2.5 and are exposed to air in a state of having an exposure ratio of 30 to 70%, and the retroreflective material has an area ratio of a region having a luminance gain value of 0 to 40 ($A_{0-40}$) of 42 to 50%, an area ratio of a region having a luminance gain value of 40 to 200 ($A_{40-200}$) of 18 to 30%, and an area ratio of a region having a luminance gain value of 200 to 255 ($A_{200-255}$) of 22 to 35% as determined with a predetermined method described below. Hereinafter, the retroreflective material of the present invention will be described in detail.

[Structure]

As illustrated in Fig. 1, the retroreflective material of the present invention includes a layered body 1 including a transparent resin layer 11, a reflective layer 12, and a fixing resin layer 13 in order described above from the incident light side, transparent microspheres 2 embedded in the layered body 1 from the transparent resin layer 11 side and each partially exposed to the incident light side, and a colored layer 3 disposed on the incident light side of the transparent resin layer 11 on the whole of a surface region that is not in contact with the transparent microspheres 2.

In the retroreflective material of the present invention, the transparent microspheres 2 are each partially embedded in the layered body 1 from the transparent resin layer 11 side, and are each partially exposed to the air, and thus the layered body 1 has a recess formed along the shape of the transparent microspheres 2 on the face of the transparent microspheres 2 side.

In the retroreflective material of the present invention, the colored layer 3 is layered on the entire incident light-side surface of the transparent resin layer 11, and is absent between each of the transparent microspheres 2 and the transparent resin layer 11.

The transparent resin layer 11, the reflective layer 12, the fixing resin layer 13, and the transparent microspheres 2 are layers and members for an exhibition of retroreflective performance. The colored layer 3 exhibits a matte color tone under fluorescent light or sunlight and restrains glare due to diffuse reflection of light by the reflective layer 12 from being visually recognized through the transparent microspheres 2, and thus plays a role of restraining change in the color tone (change in the presence or absence of glare) caused by change in the viewing angle.

In the retroreflective material of the present invention, a support may be layered, as a base material to hold the fixing resin layer 1, as necessary on the face of the fixing resin layer 13 on the side opposite from the incident light side.

[Difference in Shade Observed with Digital Microscope]

The retroreflective material of the present invention is to have an area ratio of the region having a luminance gain value of 0 to 40 ($A_{0-40}$), determined with a measurement method described below, of 42 to 50%, and the area ratio is preferably 45 to 50%, and more preferably 46 to 49%. Another preferred range of the area ratio of the region having a luminance gain value of 0 to 40 ($A_{0-40}$) is, for example, 45.7 to 48.2% or 47.1 to 48.2%. The region having a luminance gain value of 0 to 40 represents a region having a deep color (that is, a region considered to have a large content of a pigment and a large thickness) in the colored layer 3.

The retroreflective material of the present invention is to have an area ratio of the region having a luminance gain value of 40 to 200 ($A_{40-200}$), determined with the measurement method described below, of 18 to 30%, and the area ratio is preferably 23 to 26%, and more preferably 24 to 26%. Another preferred range of the area ratio of the region having a luminance gain value of 40 to 200 ($A_{40-200}$) is, for example, 25.0 to 27.2% or 25.0 to 25.2%. The region having a luminance gain value of 40 to 200 represents a region having a pale color (that is, a region considered to have a small content of a pigment and a small thickness) in the colored layer 3.

In the retroreflective material of the present invention satisfying the above-described ranges of $A_{0-40}$ and $A_{40-200}$, a matte color tone is exhibited under fluorescent light or sunlight, and glare due to diffuse reflection of light by the reflective layer 12 is restrained from being visually recognized through the transparent microspheres 2, and thus change in the color tone (change in the presence or absence of glare) caused by change in the viewing angle can be restrained from occurring.

In one preferred aspect of the retroreflective material of the present invention, the region having a luminance gain value of 0 to 40 (that is, the region having a deep color) is present in the peripheral region of each of the transparent microspheres, and the region having a luminance gain value of 40 to 200 (that is, the region having a pale color) is present in the region other than the peripheral region of each transparent microsphere. With such an aspect, diffuse reflection of light by the reflective layer 12 becomes more difficult to visually recognize under fluorescent light or sunlight, and thus change in the color tone (change in the presence or absence of glare) caused by change in the viewing angle can be effectively restrained from occurring.

The retroreflective material of the present invention is to have an area ratio of the region having a luminance gain value of 200 to 255 ($A_{200-255}$), determined with the measurement method described below, of 22 to 35%, and the area ratio is preferably 23 to 29%, and more preferably 24 to 28%. Another preferred range of the area ratio of the region having a luminance gain value of 200 to 255 ($A_{200-255}$) is, for example, 25.0 to 27.8% or 25.0 to 27.2%. The region having a luminance gain value of 200 to 250 represents the region of the transparent microspheres exposed to the air. If the area ratio of the region having a luminance gain value of 200 to 250 satisfies the above-described range, the range in which the transparent microspheres 2 are exposed to the air can be sufficiently ensured, and excellent retroreflective performance can be imparted.

In the retroreflective material of the present invention, the area ratio of the region having a luminance gain value of 250 to 255 ($A_{250-255}$), determined with the measurement method described below, is not particularly limited, and is, for example, 1 to 30%, preferably 15 to 25%, and more preferably 18 to 22%. Another preferred range of the area ratio of the region having a luminance gain value of 250 to 255 ($A_{250-255}$) is, for example, 16.1 to 19.5% or 19.1 to 19.5%. The region having a luminance gain value of 250 to 255 represents the region of the completely colorless part in the region of the transparent microspheres. If the area ratio of the region having a luminance gain value of 250 to 255 satisfies the above-described range, further excellent retroreflective performance can be imparted.

In order to satisfy the above-described ranges of $A_{0-40}$, $A_{40-200}$, $A_{200-255}$, and $A_{250-255}$, the colored layer is to be formed with a specific gravure printing method described below.

(Method of determining $A_{0-40}$, $A_{40-200}$, $A_{200-255}$, and $A_{250-255}$)

In the present invention, $A_{0-40}$, $A_{40-200}$, $A_{200-255}$, and $A_{250-255}$ described above are values determined by the following procedures (1) to (3):

(1) an image is obtained by photographing the incident light side of the retroreflective material with a digital microscope at a magnification of 300.
(2) the image obtained in (1) is captured in image analysis/measurement software capable of binarization processing and measurement of an area of a binarized region, a measurement range including 50 or more of the transparent microspheres is specifiefid, and a monochrome image of the measurement range is formed.
(3) the monochrome image formed in (2) is binarized into a region having a luminance gain value of 0 to 40 and another region, and an area ratio (%) of the region having a luminance gain value of 0 to 40 is calculated as $A_{0-40}$.

the monochrome image formed in (2) is binarized into a region having a luminance gain value of 40 to 200 and another region, and an area ratio (%) of the region having a luminance gain value of 40 to 200 is calculated as $A_{40-200}$.
the monochrome image formed in (2) is binarized into a region having a luminance gain value of 200 to 255 and another region, and an area ratio (%) of the region having a luminance gain value of 200 to 255 is calculated as $A_{200-255}$.
the monochrome image formed in (2) is binarized into a region having a luminance gain value of 250 to 255 and another region, and an area ratio (%) of the region having a luminance gain value of 250 to 255 is calculated as $A_{250-255}$.

As the digital microscope used in (1) above, for example, a commercially available product such as "Digital Microscope VHX-900F, Lens VH-Z100" (manufactured by KEYENCE CORPORATION) can be used.

The image analysis/measurement software used in (2) above is to be capable of binarization processing and measurement of an area of a binarized region, and for example, a commercially available product such as "WinROOF Ver 7.0.0" (manufactured by MITANI Corporation) can be used.

In (3) above, for binarization processing into the region having a luminance gain value of 0 to 40 and another region, the threshold is to be set to a lower limit of the luminance range of 0, and the upper limit is to be set to 40. For binarization processing into the region having a luminance gain value of 40 to 200 and another region, the threshold is to be set to a lower limit of the luminance range of 40, and the upper limit is to be set to 200. For binarization processing into the region having a luminance gain value of 200 to 255 and another region, the threshold is to be set to a lower limit of the luminance range of 200, and the upper limit is to be set to 255. For binarization processing into the region having a luminance gain value of 250 to 255 and another region, the threshold is to be set to a lower limit of the luminance range of 250, and the upper limit is to be set to 255.

In (3) above, the area ratio of the region having a luminance gain value of 0 to 40, the area ratio of the region having a luminance gain value of 40 to 200, the area ratio of the region having a luminance gain value of 200 to 255, and the area ratio of the region having a luminance gain value of 250 to 255 based on the entire measurement range are calculated to determine $A_{0-40}$, $A_{40-200}$, $A_{200-255}$, and $A_{250-255}$, respectively.

For an example of the retroreflective material of the present invention, an image observed with a digital microscope and images binarized by image processing under predetermined conditions are shown in Figs. 2 to 6. Fig. 2 is an image of the retroreflective material of Example 1 described below observed with a digital microscope at a magnification of 300. Fig. 3 is an image obtained by capturing the image of the retroreflective material of Example 1 described below observed with a digital microscope in image analysis/measurement software capable of binarization processing and measurement of an area of a binarized region, specifying a measurement range including 50 or more of the transparent microspheres, forming a monochrome image of the measurement range, and binarizing the monochrome image into a region having a luminance gain value of 0 to 40 and another region (a region having a luminance gain value of 0 to 40 shown in gray, and another region shown in black or white). Fig. 4 is an image obtained by processing the retroreflective material of Example 1 described below in the same manner as described above for binarization into a region having a luminance gain value of 40 to 200 and another region (a region having a luminance gain value of 40 to 200 shown in gray, and another region shown in black or white). Fig. 5 is an image obtained by processing the retroreflective material of Example 1 described below in the same manner as described above for binarization into a region having a luminance gain value of 200 to 255 and another region (a region having a luminance gain value of 200 to 255 shown in white, and another region shown in black). Fig. 5 is an image obtained by processing the retroreflective material of Example 1 described below in the same manner as described above for binarization into a region having a luminance gain value of 200 to 255 and another region (a region having a luminance gain value of 200 to 255 shown in gray on the transparent glass spheres, and another region shown in black, gray, or white). Fig. 6 is an image obtained by processing the retroreflective material of Example 1 described below in the same manner as described above for binarization into a region having a luminance gain value of 250 to 255 and another region (a region having a luminance gain value of 250 to 255 shown in gray on the transparent glass spheres, and another region shown in black, gray, or white). Each of the regions having a luminance gain value of 0 to 40, 40 to 200, 200 to 255, and 250 to 255 is colored and identified by the above-described binarization processing, and in Figs. 3 to 6, the images obtained by the binarization processing are shown in black and white, and thus these regions are shown in gray.

[Transparent Resin Layer 11]

In the retroreflective material of the present invention, the transparent resin layer 11 is disposed on the incident light side of the reflective layer 12, and functions to adjust the reflection luminance and change the color tone of emitted light, and also functions to support the colored layer 3.

The resin that forms the transparent resin layer 11 is not particularly limited as long as the resin has optical transparency, and examples of the resin include polyurethane-based resins, acrylic-based resins, and polyester-based resins. The resin that forms the transparent resin layer 11 may be copolymerized with a silane coupling agent as necessary for the purpose of imparting a property such as durability or adhesiveness to the transparent resin layer 11. The resin that forms the transparent resin layer 11 may also be crosslinked with a crosslinking agent such as a polyisocyanate crosslinking agent, an epoxy crosslinking agent, or a melamine-based resin as necessary for the purpose of imparting a property such as heat resistance or washing resistance to the transparent resin layer.

The transparent resin layer 11 may contain additives such as an ultraviolet absorber and an antioxidant according to the use of the retroreflective material, required functions, and the like.

The thickness of the transparent resin layer 11 is not particularly limited, and for example, the layer has a thickness of 200 to 2,000 nm, preferably 300 to 1,000 nm, and more preferably 300 to 800 nm in the direction from the center of each transparent microsphere 2 at an angle of 90° with respect to the plane direction.

[Reflective Layer 12]

In the retroreflective material of the present invention, the reflective layer 12 is formed using a metal thin film and disposed between the transparent resin layer 11 and the fixing resin layer 13, and functions to cause retroreflection of light incident from the transparent microspheres 2.

The constituent metal of the metal thin film that forms the reflective layer 12 is not particularly limited as long as the metal can cause retroreflection of light incident from the transparent microspheres, and examples of the metal include aluminum, titanium, zinc, silica, tin, nickel, and silver. Among these metals, aluminum is preferable from the viewpoint of imparting further excellent retroreflective performance.

The thickness of the reflective layer 12 is not particularly limited, and is, for example, 100 to 2,000 Å, and preferably 600 to 1,000 Å.

[Fixing Resin Layer 13]

In the retroreflective material of the present invention, the fixing resin layer 13 functions to embed and hold the transparent microspheres.

The resin that forms the fixing resin layer 13 is not particularly limited as long as the resin can embed and hold the transparent microspheres 2, and is to be appropriately set in consideration of a property, such as flexibility, required for the retroreflective material. Specific examples of the resin that forms the fixing resin layer 13 include polyester-based resins, polyolefin-based resins (such as polyethylene and polypropylene), ethylene-vinyl acetate copolymer resins, polyvinyl alcohol, acrylic-based resins, urethane-based resins, and ester-based resins. Among these resins, polyester-based resins are preferable from the viewpoint of imparting excellent flexibility.

The resin that forms the fixing resin layer 13 may be copolymerized with a silane coupling agent as necessary. The fixing resin layer 13 copolymerized with a silane coupling agent as described above can have properties such as durability and adhesiveness. The resin that forms the fixing resin layer 13 may also be crosslinked with a crosslinking agent such as a polyisocyanate crosslinking agent, an epoxy crosslinking agent, or a melamine-based resin as necessary. The fixing resin layer 13 crosslinked with a crosslinking agent as described above can have properties such as heat resistance and washing resistance.

The fixing resin layer 13 may contain additives such as a dye, a pigment, a phosphorescent pigment, and an inorganic filler according to the use of the retroreflective material, required functions, and the like.

The thickness of the fixing resin layer 13 is not particularly limited as long as the layer can embed and hold the transparent microspheres 2, and is, for example, 15 to 300 $\mu$m, and preferably 20 to 200 $\mu$m.

[Transparent Microsphere 2]

In the retroreflective material of the present invention, each of the transparent microspheres 2 is a member embedded, from the incident light side, in the layered body 1 including the transparent resin layer 11, the reflective layer 12, and the fixing resin layer 13. The transparent microspheres 2 function to transmit incident light and emitted light resulting from retroreflection by the reflective layer.

The transparent microspheres 2 to be used have a refractive index of 1.6 to 2.5. Using the transparent microspheres 2 having such a refractive index enables focusing on the reflective layer to impart excellent retroreflective performance. The refractive index of each transparent microsphere 2 is preferably 1.8 to 2.2, and more preferably 1.9 to 2.1 from the viewpoint of imparting further excellent retroreflective performance.

The exposure ratio of each transparent microsphere 2 is not particularly limited, and is, for example, 30 to 70%, preferably 30 to 60%, and more preferably 35 to 45%. In the present invention, the exposure ratio of each transparent microsphere 2 refers to the ratio (%) of the height of the region exposed to the air in the transparent microsphere 2 to the diameter of the transparent microsphere 2, and is a value calculated with the following formula.

$$\text{Exposure ratio (\%) of transparent microsphere} = (X/R) \times 100$$

R: Diameter of transparent microsphere 1
X: Length from uppermost part on incident light side of colored layer layer 3 to apex on incident light side of transparent microsphere 2

In the present invention, the exposure ratio is a value calculated as an average of exposure ratios measured for 30 or more of the transparent microspheres 2 embedded in the retroreflective material.

The average particle diameter of the transparent microspheres 2 is not particularly limited, and is usually 30 to 200 $\mu$m, preferably 40 to 120 $\mu$m, more preferably 50 to 100 $\mu$m, and particularly preferably 75 to 90 $\mu$m. In the present description, the average particle diameter of the transparent microspheres 2 is a value obtained by measuring the maximum diameters of 30 of the transparent microspheres 2 at a magnification of 500 using a digital microscope and calculating the average of the maximum diameters.

The material of the transparent microspheres 2 is not particularly limited as long as the transparent microspheres 2 can have a refractive index as described above, and may be glass, a resin, or the like. The transparent microspheres 2 including glass are excellent in transparency, chemical resistance, washing resistance, weather resistance, and the like, and are preferably used in the present invention.

In the retroreflective material of the present invention, the number of transparent microspheres 2 embedded per unit area is to be appropriately set according to the retroreflective performance to be imparted, and the number of transparent microspheres 2 in 1 mm$^2$ of the retroreflective material is, for example, 50 to 5,000, preferably 100 to 250, and more preferably 150 to 180.

[Colored Layer 3]

In the retroreflective material of the present invention, the colored layer 3 is disposed on the incident light side of the transparent resin layer 11 on the whole of the surface region that is not in contact with the transparent microspheres 2, and the colored layer 3 is absent between each of the transparent microspheres 2 and the transparent resin layer 11. The colored layer 3 satisfying the above-described range of difference in shade observed with a digital microscope exhibits a matte color tone under fluorescent light or sunlight, restrains glare due to diffuse reflection of light by the reflective layer 12 from being visually recognized through the transparent microspheres 2, and thus functions to restrain change in the color tone (change in the presence or absence of glare) caused by change in the viewing angle from occurring.

The color exhibited by the colored layer 3 is not particularly limited. The color may be black, white, red, blue, yellow, violet, or the like, and is preferably black. The colored layer 3 may have only one color, or may have a pattern, a design, or the like formed by combining two or more colors.

The colored layer 3 contains at least a colorant and a binder.

The colorant used in the colored layer 3 may be a pigment or a dye, and is preferably a pigment.

The pigment may be an inorganic pigment or an organic pigment. Examples of the inorganic pigment include black pigments such as carbon black, white pigments such as zinc white, lead white, and titanium dioxide, red pigments such as red lead and red iron oxide, yellow pigments such as chrome yellow and zinc yellow, and blue pigments such as potassium ferrocyanide and ultramarine blue. Examples of the organic pigment include red pigments such as quinacridone, diketopyrrolopyrrole, anthraquinone, perylene, perinone, and indigoid, blue pigments such as phthalocyanine, anthraquinone, and indigoid, green pigments such as phthalocyanine, azomethine, and perylene, and violet pigments such as dioxazine, quinacridone, perylene, indigoid, anthraquinone (anthrone), and xanthene. Among these pigments, inorganic pigments are preferable, black pigments are more preferable, and carbon black is particularly preferable from the viewpoint of satisfying the difference in shade observed with a digital microscope preferably within the above-described range.

The pigment used in the colored layer 3 is to include micron-size particles, and the average particle diameter is, for example, 1 to 2 $\mu$m, preferably 0.5 to 1 $\mu$m, and more preferably 0.1 to 0.5 $\mu$m. In the present invention, the average particle diameter of the pigment is a value of a median diameter (D50) measured with a laser diffraction/scattering method.

The colored layer 3 preferably contain the colorant at a content of 16 to 25 mass%, more preferably 17 to 25 mass%, and particularly preferably 18 to 24 mass% from the viewpoint of satisfying the difference in shade observed with a digital microscope preferably within the above-described range.

In the case of forming the colored layer 3 by two times of gravure printing, the colored layer formed by the first gravure printing and the colored layer formed by the second gravure printing are totaled, the amount of both the layers are regarded to be 100 mass%, and the content of the colorant in the colored layer 3 is the proportion of the total amount of the colorant contained in both the layers. The same applies to the contents of other components, described below, in the colored layer 3.

The binder used in the colored layer 3 is preferably a resin such as a urethane resin, an acrylic polyol resin, an acrylic resin, an ester resin, an amide resin, a butyral resin, a styrene resin, a urethane-acrylic copolymer, a vinyl chloride-vinyl acetate copolymer resin, a vinyl chloride-vinyl acetate-acrylic copolymer resin, a chlorinated propylene resin, a cellulose nitrate resin (nitrocellulose), or a cellulose acetate resin from the viewpoint of satisfying the difference in shade observed with a digital microscope preferably within the above-described range. Only one of such resins may be used, or two or more of the resins may be used in combination.

Among these binders, combination of a urethane resin and an acrylic polyol resin is more preferable from the viewpoint of satisfying the difference in shade observed with a digital microscope preferably within the above-described range. In the case of using a urethane resin and an acrylic polyol resin in combination, the ratio of these resins is not particularly limited, and the amount of the acrylic polyol resin is, for example, 10 to 300 parts by mass, preferably 20 to 150 parts by mass, and more preferably 40 to 70 parts by mass based on 100 parts by mass of the urethane resin.

The colored layer 3 preferably contain the binder at a content of 30 to 80 mass%, more preferably 45 to 70 mass%, and particularly preferably 55 to 65 mass% from the viewpoint of satisfying the difference in shade observed with a digital microscope preferably within the above-described range.

The colored layer 3 is desirably crosslinked with a polyisocyanate crosslinking agent. Examples of the polyisocyanate crosslinking agent include toluene diisocyanate (TDI), diphenylmethane diisocyanate (MDI), isophorone diisocyanate (IPDI), and hexamethylene diisocyanate (HDI) crosslinking agents. Among them, hexamethylene diisocyanate (HDI) crosslinking agents are preferable.

The colored layer 3 contains the polyisocyanate crosslinking agent at a content of, for example, 1 to 30 mass%, preferably 5 to 20 mass%, and more preferably 10 to 15 mass%.

The colored layer 3 may also contain silica. The silica is to include nano-size particles, and the average particle diameter is, for example, 1 to 30 nm, preferably 3 to 20 nm, and more preferably 5 to 10 nm. In the present invention, the average particle diameter of silica is a value measured with a transmission electron microscope.

In a case where the colored layer 3 contains silica, the content is, for example, 1 to 15 mass%, preferably 2 to 10 mass%, and more preferably 4 to 6 mass%.

The amount of the colored layer 3 layered in the retroreflective material of the present invention is not particularly limited as long as the difference in shade observed with a digital microscope can be within the above-described range, and is, for example, 0.6 to 5.0 g/m$^2$, preferably 1.5 to 3.5 g/m$^2$, more preferably 1.0 to 2.5 g/m$^2$, and particularly preferably 2.0 to 2.5 g/m$^2$.

If the colored layer 3 is formed with a specific gravure printing method described below, the difference in shade observed with a digital microscope can be within the above-described range.

[Support]

In the retroreflective material of the present invention, the support is a member provided as necessary, and functions as a base material that holds the fixing resin layer 13. The support may be not provided, for example, at the distribution stage. The support may be layered directly on the fixing resin layer 13, or may be layered on the fixing resin layer 13 via an adhesive layer formed of an adhesive.

The material included in the support is to be appropriately set in consideration of the use of the retroreflective material and a required property such as strength or flexibility. Specific examples of the material of the support include natural fibers such as pulp, resins such as polyesters such as polyethylene terephthalate and polyethylene naphthalate, and metals. The shape of the support is also not particularly limited, and is, for example, a shape of a sheet of a woven or knitted fabric, a nonwoven fabric, a film, paper, or the like, a thread shape, or a string shape. The shape is preferably a shape of a sheet of a woven or knitted fabric, a nonwoven fabric, a film, paper, or the like.

[Retroreflective Performance]

The retroreflective material of the present invention has excellent retroreflective performance. Specific retroreflective performance of the retroreflective tape of the present invention is 200 cd/lx/m$^2$ or more, preferably 200 to 650 cd/lx/m$^2$, and more preferably 350 to 450 cd/lx/m$^2$ in the case of an entrance angle of light from a light source of 5° and an observation angle of 0.2°. In the present description, the retroreflective performance (cd/lx/m$^2$) in the case of an entrance angle of light from a light source of 5° and an observation angle of 0.2° is a value measured under the conditions of an entrance angle of 5° and an observation angle of 0.2° in accordance with the method described in JIS Z 9117 (2010).

[Intended Use]

The retroreflective material of the present invention can be used in various applications such as safety clothing, apparel, bags, suitcases, shoes, road markings, retroreflective photoelectric sensors, and touch panels (for example, a touch panel of an infrared retroreflection detection system). In particular because the retroreflective material of the present invention exhibits a matte color tone without glare under fluorescent light or sunlight, is restrained from change in the color tone caused by change in the viewing angle, and exhibits excellent design, the retroreflective material is preferably used for applications of safety clothing, apparel, bags, suitcases, and shoes, and particularly preferably used for applications of safety clothing and apparel.

[Production Method]

The method for producing the retroreflective material of the present invention is not particularly limited as long as the retroreflective material can have the above-described configuration and properties, and a preferred example is a method including the following steps 1 to 7.

Step 1: A step of heating a release support in which a thermoplastic film is layered on a base film, at a temperature equal to or higher than the softening point of the thermoplastic film to soften the thermoplastic film.

Step 2: A step of obtaining a release support in which transparent microspheres 2 are embedded by, before, simultaneously, or after the step 1, spreading the transparent microspheres 2 on the thermoplastic film in the release support, and cooling the resulting product at the time when the transparent microspheres 2 are embedded in the softened thermoplastic film at a predetermined ratio to cure the thermoplastic film.

Step 3: A step of forming a transparent resin layer 11 by applying a resin that forms the transparent resin layer 11 to the transparent microspheres 2 side of the release support in which the transparent microspheres 2 are embedded.

Step 4: A step of layering a reflective layer 12 on the transparent resin layer 11.

Step 5: A step of layering a fixing resin layer 13 by applying a resin that forms the fixing resin layer 13 to the reflective layer 12.

Step 6: A step of forming a colored layer 3 satisfying the above-described range of difference in shade observed with a digital microscope by, after removing the release support, performing gravure printing twice on the transparent microspheres 2 side using a gravure printing ink composition that forms the colored layer 3.

Step 7: A step of bonding the fixing resin layer 1 and a support 6 together as necessary before or after the step 6.

<Step 1>

In the step 1, a release support in which a thermoplastic film is layered on a base film is heated at a temperature equal to or higher than the softening point of the thermoplastic film to soften the thermoplastic film.

The base film in the release support used in the step 1 is not particularly limited as long as the base film can stably hold its shape at the softening temperature of the thermoplastic film, and examples of the base film include polyester films such as films of polyethylene terephthalate and polyethylene naphthalate. The thermoplastic film in the release support used in the step 1 is preferably a resin film that softens at a low temperature, and examples of such a resin film include polyolefin-based resin films such as films of polyethylene and polypropylene. The thickness of the thermoplastic film in the release support used in the step 1 is to be set according to the average particle diameter of the transparent microspheres 1.

<Step 2>

In the step 2, a release support in which transparent microspheres 2 are embedded is obtained by, before, simultaneously, or after the step 1, spreading the transparent microspheres 2 on the thermoplastic film in the release support, and cooling the resulting product at the time when the transparent microspheres 2 are embedded in the softened thermoplastic film at a predetermined ratio to cure the thermoplastic film.

In the step 2, the transparent microspheres 2 are embedded in the thermoplastic film by gravitational sedimentation of the transparent microspheres 2 placed on the softened thermoplastic film. Therefore, in the step 2, the embedded ratio of the transparent microspheres 2 in the fixing resin layer 13 side can be controlled by appropriately adjusting the heating temperature and the heating time for softening to adjust the degree of softening of the thermoplastic film in consideration of the size and the density of each transparent microsphere 2, the density and the thickness of the thermoplastic film, and the like in the step 1.

<Step 3>

In the step 3, a transparent resin layer 11 is formed by applying a resin that forms the transparent resin layer 11 to the transparent microspheres 2 side of the release support in which the transparent microspheres 2 are embedded. The step 3 is performed after the step 2 and after the thermoplastic film is cooled or allowed to cool and thus returns to its cured state. In the step 3, the resin that forms the transparent resin layer 5 is to be applied to the transparent microspheres side with a known resin coating method.

<Step 4>

In the step 4, a reflective layer 12 is layered on the transparent resin layer 11. The reflective layer 3 is to be formed in the step 4 with a known metal film forming method such as vapor deposition, sputtering, chemical vapor deposition, or plating. The method of forming the reflective layer 3 is preferably vapor deposition.

<Step 5>

In the step 5, a fixing resin layer 13 is layered by applying a resin that forms the fixing resin layer 13 to the reflective layer 12. In the step 5, the resin that forms the fixing resin layer 13 is to be applied to the reflective layer 3 with a known resin coating method.

<Step 6>

In the step 6, a colored layer 3 satisfying the above-described range of difference in shade observed with a digital microscope is formed by, after removing the release support, performing gravure printing twice on the transparent microspheres 2 side using a gravure printing ink composition that forms the colored layer 3.

In formation of the colored layer 3 in the step 6, the operation condition is to be set so that the difference in shade observed with a digital microscope satisfies the above-described range. In the step 6, gravure printing is performed on the entire surface of the transparent microspheres 2 side using the gravure printing ink composition that forms the colored layer 3, and therefore the gravure printing ink composition is temporarily attached also to the surface of each transparent microsphere 2. At this time, if the gravure printing ink composition attached to the surface of each transparent microsphere 2 flows down before drying and does not remain on the surface of each transparent microsphere 2 finally, and the gravure printing ink composition that has flowed down is localized in the peripheral region of each transparent microsphere 2, the amount of the colorant is increased in the peripheral region of each transparent microsphere 2, and the difference in shade observed with a digital microscope can satisfy the above-described range. In order to create such a difference in shade, it is important to set the conditions of the gravure printing performed twice in the step 6 as follows.

• Conditions of First Gravure Printing

The composition of the gravure printing ink composition used in the first gravure printing is preferably set so that the content of the colorant is 1 to 8 mass%, the content of the binder is 5 to 20 mass%, and the balance is the amount of a solvent, more preferably so that the content of the colorant is 2 to 7 mass%, the content of the binder is 7 to 15 mass%, and the balance is the amount of the solvent, and particularly preferably so that the content of the colorant is 3 to 6 mass%, the content of the binder is 10 to 12 mass%, and the balance is the amount of the solvent.

In a case where the colored layer 3 contains a polyisocyanate crosslinking agent, the gravure printing ink composition used in the first gravure printing is to contain the polyisocyanate crosslinking agent preferably at a content of 0.5 to 10 mass%, more preferably 1 to 6 mass%, and particularly preferably 3 to 5 mass%.

In a case where the colored layer 3 contains silica, the gravure printing ink composition used in the first gravure printing is to contain silica preferably at a content of 0.1 to 5 mass%, more preferably 0.3 to 3 mass%, and particularly preferably 0.5 to 1.5 mass%.

In the gravure printing ink composition used in the first gravure printing, the solvent is preferably a mixed solvent of methyl ethyl ketone, methyl isobutyl ketone, isopropyl alcohol, and ethyl acetate. The mixed solvent may further contain propylene glycol monomethyl ether methoxypropanol and/or butyl acetate. The mixed solvent more specifically contains 30 to 75 parts by mass and preferably 40 to 50 parts by mass of methyl isobutyl ketone, 20 to 50 parts by mass and preferably 25 to 40 parts by mass of isopropyl alcohol, 0 to 20 parts by mass and preferably 3 to 10 parts by mass of propylene glycol monomethyl ether methoxypropanol, 3 to 60 parts by mass and preferably 45 to 55 parts by mass of ethyl acetate, and 0 to 30 parts by mass and preferably 10 to 20 parts by mass of butyl acetate per 100 parts by mass of methyl ethyl ketone.

The gravure printing ink composition used in the first gravure printing desirably has a viscosity such that the flow time measured with a Zahn cup method in which a Zahn cup No. 3 is used at 25°C is 12 to 18 seconds and preferably 14 to 16 seconds.

The gravure plate used for the first gravure printing has a plate depth of 55 to 65 $\mu$m and preferably 56 to 60 $\mu$m, a line number of 30 to 45 L/cm and preferably 37 to 42 L/cm, and an intersection angle between the straight lines each connecting the centers of two adjacent cells of 30 to 60° and preferably 40 to 50°. The gravure plate used for the first gravure printing preferably has a pyramidal cell shape.

In the first gravure printing, the printing speed is to be set to 10 to 80 m/min and preferably 40 to 55 m/min.

In the first gravure printing, the printing amount of the gravure printing ink composition is to be adjusted so that the solid content mass after drying is 0.3 to 2.5 g/m$^2$ and preferably 0.5 to 1.5 g/m$^2$.

The drying condition in the first gravure printing is 2 to 600 seconds and preferably 5 to 180 seconds under a temperature condition of 20 to 80°C and preferably 25 to 50°C.

• Conditions of Second Gravure Printing

The composition of the gravure printing ink composition used in the second gravure printing is preferably set so that the content of the colorant is 1 to 7 mass%, the content of the binder is 5 to 20 mass%, and the balance is the amount of a solvent, more preferably so that the content of the colorant is 2 to 6 mass%, the content of the binder is 7 to 15 mass%, and the balance is the amount of the solvent, and particularly preferably so that the content of the colorant is 3 to 4 mass%, the content of the binder is 10 to 12 mass%, and the balance is the amount of the solvent.

In a case where the colored layer 3 contains a polyisocyanate crosslinking agent, the gravure printing ink composition used in the second gravure printing is to contain the polyisocyanate crosslinking agent preferably at a content of 0.5 to 10 mass%, more preferably 1 to 5 mass%, and particularly preferably 2 to 3 mass%.

In a case where the colored layer 3 contains silica, the gravure printing ink composition used in the second gravure printing is to contain silica preferably at a content of 0.1 to 5 mass%, more preferably 0.3 to 3 mass%, and particularly preferably 0.5 to 1.5 mass%.

In the gravure printing ink composition used in the second gravure printing, the solvent is preferably a mixed solvent of methyl ethyl ketone, methyl isobutyl ketone, isopropyl alcohol, and ethyl acetate. The mixed solvent may further contain propylene glycol monomethyl ether methoxypropanol and/or butyl acetate. The mixed solvent more specifically contains 30 to 75 parts by mass and preferably 35 to 45 parts by mass of methyl isobutyl ketone, 20 to 50 parts by mass and preferably 25 to 35 parts by mass of isopropyl alcohol, 0 to 20 parts by mass and preferably 5 to 15 parts by mass of propylene glycol monomethyl ether methoxypropanol, 3 to 60 parts by mass and preferably 45 to 55 parts by mass of ethyl acetate, and 0 to 30 parts by mass and preferably 10 to 20 parts by mass of butyl acetate per 100 parts by mass of methyl ethyl ketone.

The gravure printing ink composition used in the second gravure printing desirably has a viscosity such that the flow time measured with a Zahn cup method in which a Zahn cup No. 3 is used at 25°C is 12 to 18 seconds and preferably 14 to 16 seconds.

The gravure plate used for the second gravure printing has a plate depth of 45 to 55 $\mu$m and preferably 50 to 54 $\mu$m, a line number of 55 to 80 L/cm and preferably 50 to 54 L/cm, and an intersection angle between the straight lines each connecting the centers of two adjacent cells of 30 to 60° and preferably 40 to 50°. The gravure plate used for the second gravure printing preferably has a pyramidal cell shape.

In the second gravure printing, the printing speed is to be set to 10 to 80 m/min and preferably 40 to 55 m/min.

In the second gravure printing, the printing amount of the gravure printing ink composition is to be adjusted so that the solid content mass after drying is 0.3 to 2.5 g/m² and preferably 1.0 to 2.0 g/m².

The drying condition in the second gravure printing is 2 to 600 seconds and preferably 5 to 180 seconds under a temperature condition of 20 to 80°C and preferably 25 to 50°C.

<Step 7>

In the step 7, the fixing resin layer 1 and a support are bonded together as necessary before or after the step 6. The step 7 is performed as necessary in the case of disposing a support. In the seventh step, the method of bonding the fixing resin layer 13 and the support together is not particularly limited, and can be, for example, a known hot pressing method, lamination method, or the like.

EXAMPLES

Hereinafter, the present invention will be specifically described with reference to Examples, but the present invention is not limited thereto.

1. Measurement Method

1-1. Average Particle Diameter of Transparent Microspheres

Transparent microspheres were collected from the retroreflective material, the maximum diameters of 30 of the transparent microspheres were measured at a magnification of 500 using a microscope (VHX-900F, Lens VH-Z100, manufactured by KEYENCE CORPORATION), and the average of the maximum diameters was calculated to determine the average particle diameter of the transparent microspheres.

1-2. Exposure Ratio of Transparent Glass Sphere

The exposure ratios of 30 or more transparent glass spheres embedded in the retroreflective material were measured, and the average of the exposure ratios was calculated to determine the exposure ratio.

1-3. Retroreflective Performance (cd/lx/m²)

The reflection luminance (cd/lx/m²) of the retroreflective material was measured in accordance with JIS Z 9117 (2010) "Retroreflective materials" using a retroreflective material cut into 20 cm × 20 cm as a sample under the conditions of an entrance angle of 5° and an observation angle of 0.2° with a colorimeter (BM-5AS manufactured by TOPCON CORPORATION) using a standard source A specified by CIE (Commission Internationale de l'Eclairage).

1-4. L* (Lightness)

L* on the exposed surface side of the transparent glass sphere was measured using a retroreflective material cut into a 15 cm square as a sample with a spectrocolorimeter (Color Meter spectrocolorimeter SC-P45, manufactured by Suga Test Instruments Co., Ltd.) in accordance with the apparatus manual with a measurement area diameter set to 30 mm using a halogen lamp (12 V, 50 W, D65) light source that is an accessory of the apparatus.

1-5. Retroreflective Performance and L* After Washing

The retroreflective material was cut into 50 mm × 250 mm, the cut retroreflective material was attached to a ballast (50 mm × 250 mm) compliant with ISO 6330 with a hot melt adhesive, and washing of the ballast was repeated 50 times under the conditions specified in the ISO 6330-6N method (washing temperature: 60°C). After washing 50 times, the retroreflective performance and $L^*$ were measured with the above-described methods. The retroreflective performance and $L^*$ after washing were measured only for the retroreflective materials in Examples 1 and 2.

1-6. Area Ratio of Luminance Range 0-40 ($A_{0-40}$), Area Ratio of Luminance Range 40-200 ($A_{40-200}$), Area Ratio of Luminance Range 200-255 ($A_{200-255}$), and Area Ratio of Luminance Range 250-255 ($A_{250-255}$)

First, the incident light side of the retroreflective material was photographed with a digital microscope (VHX-900F, Lens VH-Z100, manufactured by KEYENCE CORPORATION) at a magnification of 300 (at a brightness such that the illumination dial is in the direction of the short hour hand of a clock showing half past nine, illumination method: coaxial epi-illumination, shutter speed: 70) to obtain an image.

The image obtained above was captured in image analysis/measurement software WinROOF Ver 7.0.0 (manufactured by MITANI Corporation), a measurement range including 50 or more of 50 or more of the transparent glass spheres was specified with a rectangle, and a monochrome image of the measurement range was formed.

Next, the monochrome image formed above was binarized with a threshold set to the lower limit of the luminance range of 0 and an upper limit set to 40, and the area ratio of the region having a luminance gain value of 0 to 40 ($A_{0-40}$) based on the entire measurement range was calculated. Furthermore, the monochrome image formed above was binarized with a threshold set to the lower limit of the luminance range of 40 and an upper limit set to 200, and the area ratio of the region having a luminance gain value of 40 to 200 ($A_{40-200}$) based on the entire measurement range was calculated. In addition, the monochrome image formed above was binarized with a threshold set to the lower limit of the luminance range of 200 and an upper limit set to 255, and the area ratio of the region having a luminance gain value of 200 to 255 ($A_{200-255}$) based on the entire measurement range was calculated. Furthermore, the monochrome image formed above was binarized with a threshold set to the lower limit of the luminance range of 250 and an upper limit set to 255, and the area ratio of the region having a luminance gain value of 250 to 255 ($A_{250-255}$) based on the entire measurement range was calculated. $A_{0-40}$, $A_{40-200}$, $A_{200-255}$, and $A_{250-255}$ were rounded off to the first decimal place and expressed as numerical values to the first decimal place.

1-7. Evaluation of Design

The retroreflective material was visually observed from the exposed surface side of the transparent glass spheres from an angle of 90° with respect to the surface direction of the retroreflective material (the front view) and from an angle of 45° with respect to the surface direction of the retroreflective material (the perspective view) under fluorescent light, and the color tone was evaluated in accordance with the following criteria.

(Criteria)

A: Glare is completely absent, and remarkably excellent matte tone design is recognized.
B: Glare is almost absent, and excellent matte tone design is recognized.
C: Slight glare is observed, and matte tone design is not sufficiently exhibited.
D: Glare is present, and almost no matte tone design is recognized.
E: Strong glare is present, and no matte tone design is recognized.

2. Production of Retroreflective Material Including Colored Layer Formed on Surface

2-1. Preparation of Open Type Retroreflective Material Intermediate

As a release support, a polyethylene film having a thickness of 28 μm laminated on a polyester film having a thickness of 75 μm was used and heated at 200°C for 2 minutes to melt the polyethylene film. In this state, as transparent microspheres, transparent glass spheres having an average particle diameter of 70 μm and a refractive index of 1.93 were spread on substantially one surface so that the number of the transparent glass spheres was 180 particles/mm$^2$, and the resulting product was cooled to cure the polyethylene film. Subsequently, a solution for transparent resin layer formation having a composition shown in Table 1 was applied so that the amount of the solution was 27 g/m$^2$, and the resulting product was dried under conditions of a temperature of 155°C and a time of 1.5 minutes to form a transparent resin layer. Next, aluminum was deposited on the transparent resin layer with a vapor deposition method to form a reflective layer having a thickness of 700 Å. Furthermore, polyethylene terephthalate (hereinafter, sometimes abbreviated as PET) was applied on the reflective layer to form a fixing resin layer. Thereafter, a polyester-cotton taffeta fabric to be used as a support and the fixing resin layer were bonded together by hot pressing at 130°C, and then the release support was removed. The transparent resin layer had a thickness (a thickness in the direction from the center of each transparent microsphere 2 at an angle of 90° with respect to the plane direction) of 600 nm, and the fixing resin layer had a thickness of 30 μm.

Thus, a retroreflective material intermediate was obtained in which a polyester-cotton taffeta fabric (support)/PET (fixing resin layer)/aluminum film (reflective layer)/transparent resin layer/transparent glass spheres were layered in this order.

[Table 1]

| Composition of solution for transparent resin layer formation | |
|---|---|
| Component | Content (mass%) |
| Polyurethane resin | 1.50 |
| Toluene | 49.25 |
| Cyclohexanone | 49.25 |
| Total | 100.00 |
| Viscosity (25°C, Zahn cup method, Zahn cup No. 3) | 7 seconds |

2-2. Preparation of Gravure Printing Ink Composition

Gravure printing ink compositions 1 to 8 having the compositions shown in Table 2 respectively were prepared.

[Table 2]

| Composition of gravure printing ink composition | | | | | | | | |
|---|---|---|---|---|---|---|---|---|
| | 1 | 2 | 3 | 4 | 5 | 6 | 7 | 8 |
| Carbon black (micron size) | 5.9 | 3.9 | 3.5 | 2.7 | 10.5 | 8.8 | 5.1 | 6.3 |
| Silica (nano size) | 0.8 | 0.9 | 1.0 | 1.2 | 1.0 | 0.8 | 0.8 | 1.0 |
| Polyurethane resin | 6.5 | 7.0 | 7.1 | 8.5 | 9.0 | 7.6 | 6.7 | 7.8 |
| Acrylic polyol resin | 3.5 | 4.0 | 4.1 | 5.0 | 4.9 | 4.1 | 3.7 | 4.3 |
| Polyisocyanate crosslinking agent (HDI) | 2.4 | 2.4 | 2.4 | 2.8 | 3.6 | 3.0 | 2.4 | 2.9 |
| Methyl ethyl ketone | 33.1 | 33.1 | 33.1 | 32.9 | 32.7 | 33.0 | 33.1 | 32.9 |
| Methyl isobutyl ketone | 15.3 | 13.8 | 13.5 | 14.6 | 23.8 | 20.0 | 14.7 | 17.6 |
| Isopropyl alcohol | 11.5 | 10.3 | 10.0 | 9.1 | 13.3 | 12.8 | 11.0 | 11.3 |
| propylene glycol monomethyl ether methoxypropanol | 1.1 | 2.9 | 3.2 | 4.9 | 0.0 | 0.0 | 1.8 | 1.9 |
| Ethyl acetate | 16.6 | 16.6 | 16.6 | 11.8 | 1.2 | 8.8 | 16.6 | 10.7 |
| Butyl acetate | 3.3 | 5.1 | 5.5 | 6.5 | 0.0 | 1.1 | 4.1 | 3.3 |
| Total | 100.0 | 100.0 | 100.0 | 100.0 | 100.0 | 100.0 | 100.0 | 100.0 |
| Viscosity (25°C, Zahn cup method, Zahn cup No. 3) (sec) | 15-16 | 15-16 | 15-16 | 16-18 | 26-27 | 17-19 | 14-15 | 16-18 |
| In Table 2, the unit of the content of each component is "mass%". | | | | | | | | |

2-3. Preparation of Gravure Plate

Gravure plates A to D shown in Table 3 were prepared. Each of the gravure plates A to D was made with a Helio engraving machine using a diamond engraving needle (stylus angle: 125°), and had a pyramidal cell shape.

[Table 3]

| | A | B | C | D |
|---|---|---|---|---|
| Plate depth (μm) | 58 | 40 | 34 | 52 |
| Line number/cm | 39 | 53 | 54 | 58 |
| Intersection angle between straight lines each connecting centers of two adjacent cells (°) | 48 | 45 | 45 | 44 |

2-4. Preparation of Ink Composition for Comma Coater

An ink composition I for a comma coater having the composition shown in Table 4 was prepared.

[Table 4]

| Composition of ink composition I for comma coater | |
|---|---|
| | I |
| Carbon black | 3.4 |
| Polyurethane resin | 18.4 |
| Vinyl ester | 8.2 |
| Cyclohexane | 31.0 |
| Toluene | 24.0 |
| Methyl ethyl ketone | 15.0 |
| Total | 100.0 |
| In Table 4, the unit of the content of each component is "mass%". | |

2-5. Production of Retroreflective Material

<Example 1>

Gravure printing (solid printing) was performed twice on the entire surface on the transparent glass spheres side of the retroreflective material intermediate to obtain a retroreflective material including a colored layer formed on the surface.
The first gravure printing was performed using the gravure plate A and the gravure printing ink composition 1 at a printing speed of 50 m/min (with drying at 30°C for about 7 seconds) under the condition that the coating amount after drying was about 0.9 g/m$^2$, and then the second printing was performed.
The second gravure printing was performed using the gravure plate D and the gravure printing ink composition 3 at a printing speed of 50 m/min (with drying at 30°C for about 7 seconds) under the condition that the coating amount after drying was about 1.5 g/m$^2$, and then the resulting product was stored at about 40°C for 48 hours.
The exposure ratio of the transparent glass spheres of the obtained retroreflective material was measured and found to be about 40%.

<Example 2>

A retroreflective material was produced under the same conditions as in Example 1 except that the gravure printing ink composition 2 was used in the first gravure printing. The exposure ratio of the transparent glass spheres of the obtained retroreflective material was measured and found to be about 40%.

<Example 3>

A retroreflective material was produced under the same conditions as in Example 1 except that the gravure printing ink composition 3 was used in the first gravure printing. The exposure ratio of the transparent glass spheres of the obtained retroreflective material was measured and found to be about 40%.

<Comparative Example 1>

Gravure printing (solid printing) was performed twice on the entire surface on the transparent glass spheres side of the retroreflective material intermediate to obtain a retroreflective material including a colored layer formed on the surface.

The first gravure printing was performed using the gravure plate B and the gravure printing ink composition 4 at a printing speed of 25 m/min (with drying at 30°C for 1 minute) under the condition that the coating amount after drying was about 1.2 g/m$^2$, and then the second printing was performed.

The second gravure printing was performed using the gravure plate B and the gravure printing ink composition 4 at a printing speed of 25 m/min (with drying at 30°C for 1 minute) under the condition that the coating amount after drying was about 1.2 g/m$^2$, and then the resulting product was stored at about 40°C for 48 hours.

The exposure ratio of the transparent glass spheres of the obtained retroreflective material was measured and found to be about 40%.

<Comparative Example 2>

Gravure printing (solid printing) was performed twice on the entire surface on the transparent glass spheres side of the retroreflective material intermediate to obtain a retroreflective material including a colored layer formed on the surface.

The first gravure printing was performed using the gravure plate C and the gravure printing ink composition 5 at a printing speed of 50 m/min (with drying at 30°C for 1.5 minutes) under the condition that the coating amount after drying was about 1.0 g/m$^2$, and then the second printing was performed.

The second gravure printing was also performed under the same conditions as the first gravure printing, and then the resulting product was stored at about 40°C for 48 hours.

The exposure ratio of the transparent glass spheres of the obtained retroreflective material was measured and found to be about 40%.

<Comparative Example 3>

Gravure printing (solid printing) was performed twice on the entire surface on the transparent glass spheres side of the retroreflective material intermediate to obtain a retroreflective material including a colored layer formed on the surface.

The first gravure printing was performed using the gravure plate D and the gravure printing ink composition 6 at a printing speed of 50 m/min (with drying at 30°C for 7 seconds) under the condition that the coating amount after drying was about 1.5 g/m$^2$, and then the second printing was performed.

The second gravure printing was performed using the gravure plate A and the gravure printing ink composition 6 at a printing speed of 50 m/min (with drying at 30°C for 7 seconds) under the condition that the coating amount after drying was about 1.3 g/m$^2$, and then the resulting product was stored at about 40°C for 48 hours.

The exposure ratio of the transparent glass spheres of the obtained retroreflective material was measured and found to be about 40%.

<Comparative Example 4>

Gravure printing (solid printing) was performed once on the entire surface on the transparent glass spheres side of the retroreflective material intermediate to obtain a retroreflective material including a colored layer formed on the surface. The gravure printing was performed using the gravure plate A and the gravure printing ink composition 7 at a printing speed of 25 m/min (with drying at 30°C for 1 minute) under the condition that the coating amount after drying was about 1.5 g/m$^2$, and then the resulting product was stored at about 40°C for 48 hours.

The exposure ratio of the transparent glass spheres of the obtained retroreflective material was measured and found to be about 40%.

<Comparative Example 5>

Gravure printing (solid printing) was performed once on the entire surface on the transparent glass spheres side of the retroreflective material intermediate to obtain a retroreflective material including a colored layer formed on the surface. The gravure printing was performed using the gravure plate B and the gravure printing ink composition 8 at a printing speed of 25 m/min (with drying at 30°C for 1 minute) under the condition that the coating amount after drying was about 1.1 g/m$^2$, and then the resulting product was stored at about 40°C for 48 hours.

The exposure ratio of the transparent glass spheres of the obtained retroreflective material was measured and found to be about 40%.

<Comparative Example 6>

The entire surface on the transparent glass spheres side of the retroreflective material intermediate was coated with the ink composition I for a comma coater using a comma coater (clearance: 200 μm) under the condition that the coating amount after drying was 6.0 g/m$^2$, and then the resulting product was dried at 125°C for 240 seconds.
The exposure ratio of the transparent glass spheres of the obtained retroreflective material was measured and found to be about 40%.

3. Production of Retroreflective Material Including Colored Layer Formed between Transparent Resin Layer and Reflective Layer

3-1. Preparation of Ink Composition for Comma Coater

An ink composition II for a comma coater having the composition shown in Table 5 was prepared.

[Table 5]

| Composition of ink composition II for comma coater | |
| --- | --- |
| | II |
| Carbon black | 0.9 |
| Polyurethane resin | 14.0 |
| Toluene | 24.1 |
| Methyl ethyl ketone | 22.7 |
| Isopropyl alcohol | 23.3 |
| Dimethylformamide | 14.0 |
| Total | 100.0 |
| In Table 5, the unit of the content of each component is "mass%". | |

3-2. Production of Retroreflective Material

<Comparative Example 7>

As a release support, a polyethylene film having a thickness of 28 μm laminated on a polyester film having a thickness of 75 μm was used and heated at 200°C for 2 minutes to melt the polyethylene film. In this state, as transparent microspheres, transparent glass spheres having an average particle diameter of 70 μm and a refractive index of 1.93 were spread on substantially one surface so that the number of the transparent glass spheres was 180 particles/mm$^2$, and the resulting product was cooled to cure the polyethylene film. Subsequently, the solution for transparent resin layer formation shown in Table 1 was applied so that the amount of the solution was 27 g/m$^2$, and the resulting product was dried under conditions of a temperature of 155°C and a time of 1.5 minutes to form a transparent resin layer.
Next, the transparent resin layer was coated with the ink composition II for a comma coater using a comma coater (clearance: 340 μm) under the condition that the coating amount after drying was 14.3 g/m$^2$, and then the resulting product was dried at 115°C for 250 seconds to form a colored layer. Thereafter, aluminum was deposited on the colored layer with a vapor deposition method to form a reflective layer having a thickness of 700 Å. Furthermore, PET) was applied to the reflective layer to form a fixing resin layer. Thereafter, a polyester-cotton taffeta fabric to be used as a support and the fixing resin layer were bonded together by hot pressing at 130°C, and then the release support was removed.
Thus, a retroreflective material was obtained in which a polyester-cotton taffeta fabric (support)/PET (fixing resin layer)/aluminum film (reflective layer)/colored layer/transparent resin layer/transparent glass spheres were layered in this order. The exposure ratio of the transparent glass spheres of the obtained retroreflective material was measured and found to be about 40%.

3. Results

Table 6 shows the composition of the colored layer in each retroreflective material. Table 7 shows the evaluation results. The retroreflective material in Examples 1 to 3 was observed with a digital microscope, and as a result, it was confirmed that the color of the colored layer is deep in the periphery of each transparent glass sphere and is paler in a region more distant from each transparent glass sphere, and that the colored layer had various shades. In the retroreflective material in Examples 1 to 3 observed with a digital microscope, formation of a colored layer was not observed on the surface of each transparent glass sphere. As can be seen from the observation result, the retroreflective material in Examples 1 to 3 had a region having a luminance gain value of 0 to 40% (deep color region) present in the periphery of each transparent glass sphere, and $A_{0-40}$ was 42 to 50%. In the retroreflective material in Examples 1 to 3, the region having a luminance gain value of 40 to 200% (pale color region) was present in a part distant from the periphery of each transparent glass sphere, and $A_{40-200}$ was 18 to 30%. Furthermore, $A_{200-255}$ was 22 to 35%, and the exposed region of each transparent glass sphere was ensured to enable sufficient retroreflection.

In the retroreflective material in Examples 1 to 3, no change in design was observed, and excellent coloring with a matte tone without glare was observed in both the front view and the perspective view. The reason is presumed that diffuse reflection of light is suppressed regardless of the viewing angle because the colored layer having a deep color region is present in the periphery of each transparent glass sphere.

Furthermore, the retroreflective material in Examples 1 to 3 had a high luminance and excellent retroreflective performance. The retroreflective material in Examples 1 and 2 stably maintained the retroreflective performance and the lightness even after repeated washing.

For reference, Fig. 2 shows an image of the retroreflective material in Example 1 observed with a digital microscope, Fig. 3 shows an image obtained by binarizing the image in Fig. 2 into a region having a luminance gain value of 0 to 40 and another region, Fig. 4 shows an image obtained by binarizing the image in Fig. 2 into a region having a luminance gain value of 40 to 200 and another region, and Fig. 5 shows an image obtained by binarizing the image in Fig. 2 into a region having a luminance gain value of 200 to 255 and another region.

Meanwhile, in the retroreflective material in Comparative Examples 1 to 5, not all of the lightness, the retroreflective performance, and the design with a matte tone without glare were satisfied because, for example, the colored layer had no shading or only slight shading, or the ink applied in gravure printing remained on the transparent glass sphere, as the result of observation with a digital microscope.

In the retroreflective material in Comparative Example 6, because the colored layer was formed on the surface with a comma coater, the ink applied with the comma coater was adhered to the transparent glass sphere, and thus the luminance was remarkably low, and the design with a matte tone without glare was also insufficient.

In the retroreflective material in Comparative Example 7, because the colored layer was disposed between the reflective layer and the transparent resin layer, the retroreflective performance was reduced by the colored layer in contact with the reflective layer, and the design with a matte tone without glare was also insufficient.

[Table 6]

| Composition of colored layer | | | | | | | | | | |
|---|---|---|---|---|---|---|---|---|---|---|
| | Example | | | Comparative Example | | | | | | |
| | 1 | 2 | 3 | 1 | 2 | 3 | 4 | 5 | 6 | 7 |
| Carbon black | 23.8 | 20.1 | 19.3 | 13.4 | 36.2 | 36.2 | 27.3 | 28.3 | 11.3 | 6.0 |
| Silica | 5.0 | 5.3 | 5.5 | 5.9 | 3.4 | 3.3 | 4.3 | 4.5 | - | - |
| Polyurethane resin | 37.2 | 38.9 | 39.2 | 42.1 | 31.0 | 31.3 | 35.8 | 35.0 | 61.3 | 94.0 |
| Acrylic polyol resin | 21.0 | 22.4 | 22.7 | 24.6 | 16.9 | 16.9 | 19.8 | 19.3 | - | - |
| Polyisocyanate crosslinking agent (HDI) | 13.0 | 13.2 | 13.3 | 13.9 | 12.4 | 12.3 | 12.8 | 13.0 | - | - |
| Vinyl ester | - | - | - | - | - | - | - | - | 27.3 | - |
| In Table 6, the unit of the content of each component is "mass%". | | | | | | | | | | |

[Table 7]

| | | | Example | | | Comparative Example | | | | | | |
|---|---|---|---|---|---|---|---|---|---|---|---|---|
| | | | 1 | 2 | 3 | 1 | 2 | 3 | 4 | 5 | 6 | 7 |
| Position of colored layer | | | Surface | Surface | Surface | Surface | Surface | Surface | Surface | Surface | Surface | Between transparent resin layer and reflective layer |
| Method of forming colored layer | | | Gravure printing | Gravure printing | Gravure printing | Gravure printing | Gravure printing | Gravure printing | Gravure printing | Gravure printing | Coating with comma coater | Coating with comma coater |
| | First gravure printing | Gravure plate | A | A | A | B | C | D | A | B | - | - |
| | | Gravure printing ink composition | 1 | 2 | 3 | 4 | 5 | 6 | 7 | 8 | - | - |
| | Second gravure printing | Gravure plate | D | D | D | B | C | A | - | - | - | - |
| | | Gravure printing ink composition | 3 | 3 | 3 | 4 | 5 | 6 | - | - | - | - |
| $A_{0-40}$ (%) | | | 48.2 | 47.1 | 45.7 | 36.9 | 36.9 | 0.0 | 34.2 | 32.0 | 36.3 | 0.0 |
| $A4_{40-200}$ (%) | | | 25.2 | 25.0 | 27.2 | 39.1 | 39.1 | 80.9 | 43.3 | 42.4 | 40.3 | 86.6 |
| $A_{200-255}$ (%) | | | 27.2 | 25.0 | 27.8 | 25.6 | 25.6 | 19.2 | 23.6 | 26.6 | 24.1 | 13.6 |
| $A_{250-256}$ (%) | | | 19.5 | 19.1 | 16.1 | 6.3 | 19.3 | 11.6 | 16.0 | 10.2 | 18.0 | 4.2 |
| Luminance ($cd/1x/m^2$) | | | 364 | 401 | 260 | 458.2 | 183.5 | 72.7 | 151.4 | 304.4 | 50 | 150 |
| $L^*$ | | | 18.35 | 19.52 | 19.23 | 22.52 | 34.6 | 19.57 | 24.32 | 24.07 | 21.98 | 21.32 |
| Luminance (ISO 6330-6N, after washing 50 times) ($cd/lx/m^2$) | | | 107 | 121 | - | - | - | - | - | - | - | - |
| $L^*$ (ISO 6330-6N, after washing 50 times) ($cd/lx/m^2$) | | | 27.89 | 27.49 | - | - | - | - | - | - | - | - |
| Evaluation of design (front view) | | | A | A | B | D | E | B | E | E | C | D |

(continued)

| | Example | | | Comparative Example | | | | | | |
|---|---|---|---|---|---|---|---|---|---|---|
| | 1 | 2 | 3 | 1 | 2 | 3 | 4 | 5 | 6 | 7 |
| Evaluation of design (perspective view) | A | A | A | D | E | C | E | E | C | C |

DESCRIPTION OF REFERENCE SIGNS

1: Layered body
11: Transparent resin layer
12: Reflective layer
13: Fixing resin layer
2: Transparent microsphere
3: Colored layer

**Claims**

1. A retroreflective material comprising:

   a layered body including a transparent resin layer, a reflective layer, and a fixing resin layer in order described above from an incident light side of the retroreflective material;
   transparent microspheres embedded in the layered body and each partly exposed to the incident light side of the retroreflective material; and
   a colored layer disposed on an incident light side of the transparent resin layer on a surface region that is not in contact with the transparent microspheres, wherein
   the reflective layer consists of a metal thin film, and
   the transparent microspheres have a refractive index of 1.6 to 2.5 and are exposed to air in a state of having an exposure ratio of 30 to 70%,
   the retroreflective material has an area ratio of a region having a luminance gain value of 0 to 40 ($A_{0-40}$) of 42 to 50%, an area ratio of a region having a luminance gain value of 40 to 200 ($A_{40-200}$) of 18 to 30%, and an area ratio of a region having a luminance gain value of 200 to 255 ($A_{200-255}$) of 22 to 35%, as determined with a method described below.

   <Method of determining $A_{0-40}$, $A_{40-200}$, and $A_{200-255}$>

   (1) an image is obtained by photographing the incident light side of the retroreflective material with a digital microscope at a magnification of 300.
   (2) the image obtained in (1) is captured in image analysis/measurement software capable of binarization processing and measurement of an area of a binarized region, a measurement range including 50 or more of the transparent microspheres is specifiefid, and a monochrome image of the measurement range is formed.
   (3) the monochrome image formed in (2) is binarized into a region having a luminance gain value of 0 to 40 and another region, and an area ratio (%) of the region having a luminance gain value of 0 to 40 is calculated as $A_{0-40}$.
   the monochrome image formed in (2) is binarized into a region having a luminance gain value of 40 to 200 and another region, and an area ratio (%) of the region having a luminance gain value of 40 to 200 is calculated as $A_{40-200}$.
   the monochrome image formed in (2) is binarized into a region having a luminance gain value of 200 to 255 and another region, and an area ratio (%) of the region having a luminance gain value of 200 to 255 is calculated as $A_{200-255}$.

2. The retroreflective material according to claim 1, wherein

   in the monochrome image binarized into the region having a luminance gain value of 0 to 40 and another region, the region having a luminance gain value of 0 to 40 is present in a peripheral region of each of the transparent microspheres, and
   in the monochrome image binarized into the region having a luminance gain value of 40 to 200 and another region, the region having a luminance gain value of 40 to 200 is present in a region other than the peripheral region of each of the transparent microspheres.

3. The retroreflective material according to claim 1 or 2, wherein the colored layer is black.

4. The retroreflective material according to claim 3, wherein the colored layer includes carbon black.

FIG. 1

FIG. 2

FIG. 3

FIG. 4

FIG. 5

FIG. 6

**INTERNATIONAL SEARCH REPORT**

| International application No. |
| --- |
| PCT/JP2020/035508 |

**A. CLASSIFICATION OF SUBJECT MATTER**
G02B 5/128(2006.01)i; B32B 7/023(2019.01)i
FI: G02B5/128; B32B7/023
According to International Patent Classification (IPC) or to both national classification and IPC

**B. FIELDS SEARCHED**

Minimum documentation searched (classification system followed by classification symbols)
G02B5/00-5/136; B32B1/00-43/00

Documentation searched other than minimum documentation to the extent that such documents are included in the fields searched
Published examined utility model applications of Japan            1922-1996
Published unexamined utility model applications of Japan          1971-2020
Registered utility model specifications of Japan                  1996-2020
Published registered utility model applications of Japan          1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2019-56836 A (KYODO PRINTING CO., LTD.) 11 April 2019 (2019-04-11) paragraphs [0016]-[0017], [0042]-[0049], [0058]-[0059], example 2, table 1, fig. 1, 8 | 1-4 |
| X | JP 2013-531809 A (3M INNOVATIVE PROPERTIES COMPANY) 08 August 2013 (2013-08-08) claims, paragraphs [0025], [0029]-[0030], [0058]-[0060], [0062], [0071], fig. 1E, example 8 | 1-4 |
| A | JP 2017-533460 A (3M INNOVATIVE PROPERTIES COMPANY) 09 November 2017 (2017-11-09) entire text, all drawings | 1-4 |
| A | JP 11-344610 A (OGI, Hisao) 14 December 1999 (1999-12-14) entire text, all drawings | 1-4 |

☒  Further documents are listed in the continuation of Box C.          ☒  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 25 November 2020 (25.11.2020) | 08 December 2020 (08.12.2020) |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**INTERNATIONAL SEARCH REPORT**

| | International application No. |
|---|---|
| | PCT/JP2020/035508 |

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2016/190019 A1 (UNITIKA SPARKLITE LTD.) 01 December 2016 (2016-12-01) entire text, all drawings | 1-4 |
| A | JP 62-62301 A (OGI, Hisao) 19 March 1987 (1987-03-19) entire text, all drawings | 1-4 |
| A | CN 104932047 A (ZHEJIANG YGM TECHNOLOGY CO., LTD.) 23 September 2015 (2015-09-23) entire text, all drawings | 1-4 |

Form PCT/ISA/210 (continuation of second sheet) (January 2015)

**INTERNATIONAL SEARCH REPORT**

Information on patent family members

International application No.

PCT/JP2020/035508

| Patent Documents referred in the Report | Publication Date | Patent Family | Publication Date |
|---|---|---|---|
| JP 2019-56836 A | 11 Apr. 2019 | (Family: none) | |
| JP 2013-531809 A | 08 Aug. 2013 | US 2011/0292508 A1 claims, paragraphs [0036], [0040]-[0041], [0069]-[0071], [0073], [0082], fig. 1E, example 8 US 2015/0015955 A1 WO 2011/147079 A1 TW 201209457 A CN 102893188 A KR 10-2013-0086299 A KR 10-2017-0038106 A | |
| JP 2017-533460 A | 09 Nov. 2017 | US 2017/0293056 A1 WO 2016/053734 A1 TW 201625990 A KR 10-2017-0065591 A CN 107003444 A | |
| JP 11-344610 A | 14 Dec. 1999 | (Family: none) | |
| WO 2016/190019 A1 | 01 Dec. 2016 | JP 2016-218311 A US 2018/0154668 A1 EP 3299853 A1 CN 107533164 A KR 10-2018-0010179 A TW 201707955 A | |
| JP 62-62301 A | 19 Mar. 1987 | (Family: none) | |
| CN 104932047 A | 23 Sep. 2015 | (Family: none) | |

Form PCT/ISA/210 (patent family annex) (January 2015)

**REFERENCES CITED IN THE DESCRIPTION**

**Patent documents cited in the description**

- JP 62062301 A
- JP 2016028293 A